# EUROPEAN PATENT APPLICATION

(11) **EP 2 312 571 A2**
(43) Date of publication of application: **20.04.2011**
(21) Application number: 10176901.6
(22) Date of filing: 15.09.2010
(51) Int. Cl.: G09G 5/02

(54) **Display apparatus and video processing method**

(30) Priority: 16.10.2009 KR 20090098713
(71) Applicant: SAMSUNG ELECTRONICS CO., LTD., Suwon-si Gyeonggi-do 442-742 (KR)
(72) Inventor: Jang, Doo-young, Gyeonggi-do (KR); Kim, Chang-sun, Gyeonggi-do (KR)
(74) Representative: D'Halleweyn, Nele Veerle Trees Gertrudis

(57) **Abstract**

Disclosed are a display apparatus and a video processing method of the display apparatus, the display apparatus including a user interface (UI) generator which generates and outputs UI information to a display unit; a user selection unit which allows a user to select a view zone; a signal processor which processes a received video signal displayable through the display unit; and a controller which controls the UI generator to display a selection menu including at least one view zone item on the display unit if a control signal for adjusting the view zone is selected from the user selection unit, and controls the signal processor to change at least one of an image quality adjusting value and a grayscale value of the received video signal if the view zone item is selected through the selection menu.

## Description

### BACKGROUND

### Field

Apparatuses and methods consistent with the exemplary embodiments relate to a display apparatus and a video processing method thereof, and more particularly, to a display apparatus and a video processing method thereof, in which quality of an image is changed according to view zones.

### Description of the Related Art

An important aspect of a display apparatus is view angle. In a particular case of a liquid crystal display (LCD) apparatus, the view angle becomes a problem. Problems with the view angle include a change in screen color or saturation occurs in a dark or bright screen when the view angle is not from the front, e.g., when a television is viewed from a bottom side or a lateral side.

To solve the problem with the view angle, technology using a wide view angle is employed and designed for the LCD apparatus in costly display products, but this results in the problem of high cost. In a twisted nematic (TN) type LCD module, which is the most general among LCD modules, white/dark saturation and color saturation occurs when the LCD module is viewed from top/bottom sides, and the total brightness is lowered. On the other hand, when the LCD module is viewed from left and right sides, color and contrast become weak.

Accordingly, an optical compensation film or the like has been used to improve the view angle, but the result has not been satisfactory. In this case, the optical compensation film is used in various LCD apparatuses for solving image coloration or widening the view angle. A stretched birefringence polymer film has been conventionally used as the optical compensation film, and an optical compensation film including an optical anisotropic layer formed with low- or high-molecular liquid crystal molecules on a transparent supporter has recently been proposed. The liquid crystal molecules have various orientations, so that optical properties not obtained by the conventional stretched birefringence polymer film can be achieved.

However, even though the liquid crystal molecules are used, it is very difficult to fully optically compensate a liquid crystal cell without any problem. Thus, there is a problem that the view angle is not sufficiently widened.

### SUMMARY

Accordingly, an aspect of the exemplary embodiments is to provide a display apparatus capable of adjusting quality of an image according to view zones, and a video processing method thereof.

Another aspect of the exemplary embodiments is to provide a display apparatus capable of displaying an image quality adjusting menu according to view zones, and a video processing method thereof.

Still another aspect of the exemplary embodiments is to provide a display apparatus capable of effectively solving a problem with a view angle, and a video processing method thereof.

The foregoing and/or other aspects of the exemplary embodiments can be achieved by providing a display apparatus including a user interface (UI) generator which generates and outputs UI information to a display unit; a user selection unit which allows a user to select a view zone; a signal processor which processes a received video signal displayable through the display unit; and a controller which controls the UI generator to display a selection menu including at least one view zone item on the display unit if a control signal for adjusting the view zone is selected from the user selection unit, and controls the signal processor to change at least one of an image quality adjusting value and a grayscale value of the received video signal if the view zone item is selected through the selection menu.

The display apparatus may further include a lookup table where at least one of the image quality adjusting value and the grayscale value is stored corresponding to each of the at least one view zone item.

The display apparatus may further include a plurality of view zone items, and the lookup table stores at least one of the image quality adjusting value and the grayscale value for each of the plurality of view zone items.

Further, the signal processor processes the received video signal based on the image quality adjusting value stored corresponding to a selected view zone item, or displays a video signal which is changed to have a stored grayscale value.

The signal processor may compare each pixel of a grayscale value of the received video signal and the stored grayscale value of the received video signal and process the received video signal to be displayed by a grayscale value corresponding to the selected view zone item.

The image quality adjusting value may include at least one of definition, brightness, a contrast ratio, a tint, value, chroma, white balance, an offset and a gain value.

The view zone item may include at least one of a lean back mode, a standing mode and a side mode.

Another aspect of the exemplary embodiments can be achieved by providing a video processing method of a display apparatus, the method including: receiving a video signal; generating and displaying a selection menu including at least one view zone item; and displaying the received video signal by changing at least one of an image quality adjusting value and a grayscale value of the received video signal in accordance with a view zone item selected through the selection menu.

### BRIEF DESCRIPTION OF THE DRAWINGS

The above and/or other aspects of the exemplary embodiments will become apparent and more readily appreciated from the following description of the exemplary embodiments, taken in conjunction with the accompanying drawings, in which:

FIG. 1 is a control block diagram of a display apparatus according to an exemplary embodiment;

FIG. 2 is a view showing a selection menu in accordance with the display apparatus of FIG. 1;

FIG. 3 is a view showing another selection menu in accordance with the display apparatus of FIG. 1; and

FIG. 4 is a control flowchart for explaining a video processing method in accordance with the display apparatus of FIG. 1.

### DETAILED DESCRIPTION OF EXEMPLARY EMBODIMENTS

Below, exemplary embodiments will be described in detail with reference to the accompanying drawings. The exemplary embodiments may be embodied in various forms without being limited to the embodiments set forth herein. Descriptions of well-known parts are omitted for clarity, and like reference numerals refer to like elements throughout.

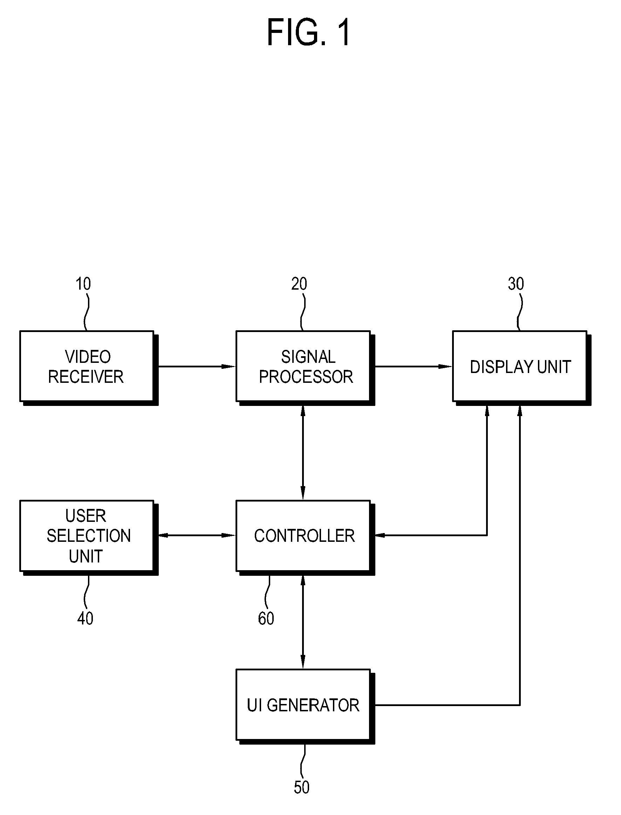

FIG. 1 is a control block diagram of a display apparatus according to an exemplary embodiment.

As shown therein, the display apparatus includes a video receiver 10, a signal processor 20, a display unit 30, a user selection unit 40, a user interface (UI) generator 50, and a controller 60.

The video receiver 10 receives a broadcast signal, or a video signal from an external source. The video receiver 10 may include an antenna to receive a broadcasting signal, and a tuner to be tuned to a broadcasting channel, and may include an input terminal or the like to which a connection cable, etc. is connected to the external source. For example, the video receiver 10 may include input terminals for an S-video signal, a component signal, a personal computer (PC) signal, a digital video interactive (DVI)-signal, a high-definition multimedia interface (HDMI) signal, etc. corresponding to various external sources.

The signal processor 20 performs a process to convert a signal input through the video receiver 10 into a signal having a format displayable in the display unit 30. The signal processor 20 may include a decoder for decoding a composite video broadcast signal (CVBS) or the S-video signal, an analog/digital (A/D) converter for converting an analog signal such as the component signal or the PC signal into a digital signal, a transition minimized differential signaling (TMDS) receiver for separating the DVI-signal into red (R), green (G) and blue (B) digital signals and horizontal/vertical (H/V) signals, etc. Further, the signal processor 20 may include a video decoder for decoding video of a video signal, a scaler to convert the video signal to be adapted for a vertical frequency, resolution and an aspect ratio, etc. corresponding to output standards of the display unit 30, and so on. Further, the signal processor 20 may adjust image quality of a video signal on the basis of a quality adjusting value corresponding to a view zone (to be described later), or output the video with an adjusted grayscale value of the video signal to the display unit 30.

The display unit 30 includes a display panel on which an image is displayed, and a panel driver to drive the display panel. The display unit 30 in this exemplary embodiment may be a display module associated with having a problem with a view angle, e.g., may include an LCD panel (not shown).

The user selection unit 40 corresponds to a user interface, which receives a control signal for view zone control and a view zone selection signal from a user. The user selection unit 40 may be achieved by a remote controller which has arrow keys, numeral keys, etc. through which a desired view zone is selected by a user, a touch panel which receives a user's selection through a pointing device, and so on.

The UI generator 50 generates a selection menu for selecting a view zone under control of the controller 60, and displays it on the display unit 30. The UI generator 50 generates the selection menu when a user inputs a control signal for controlling the view zone. The control signal indicates a UI activating signal for displaying the selection menu. The UI generator 50 may be merged into the signal processor 20 or the controller 60, or may be achieved as an independent integrated circuit (IC). The selection menu generated in the UI generator 50 will be described later.

The controller 60 controls the UI generator 50 to display the selection menu containing at least one view zone item on the display unit 30 when receiving a control signal for adjusting the view zone from the user selection unit 40, and controls the signal processor 20 to process a video signal corresponding to the selected view zone item. Here, the view zone refers to an area where a user views the display unit 30, i.e., a spatial concept that a user views the display unit 30 in front of the display unit 30. According to view zones, a user's view angle of when a user views the display unit 30 is varied. Due to an intrinsic view angle of the display unit 30, a user may view poor image quality according to the user's view angles. Thus, the controller 60 provides UI information allowing a user to select a desired view zone and thus changes the video signal.

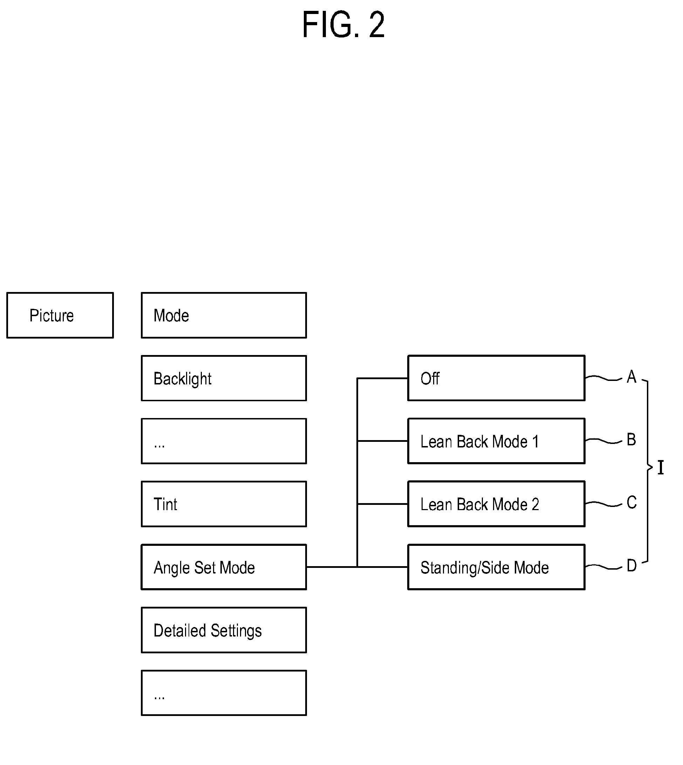

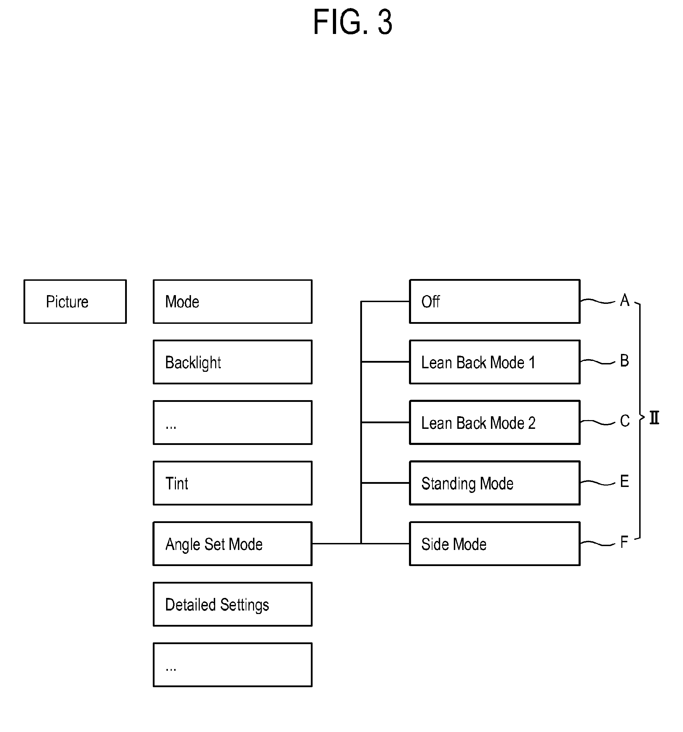

FIGs. 2 and 3 are views showing exemplary selection menus in accordance with the exemplary display apparatus. As shown therein, the selection menu I and the selection menu II are for adjusting the view zone. Selection menu I includes a plurality of view zone items A, B, C, and D and selection menu II includes a plurality of view zone items A, B, C, E and F. The selection menu I and the selection menu II are included in a top menu for entering a view angle compensating mode called "Angle set mode," and the view angle compensating mode is included in a top menu called "picture" for image adjustment. Further, a user's selection signal before displaying the selection menu I and the selection menu II may be included in the foregoing control signal. The view zone item includes at least one among an off mode A which can be a default mode, lean back modes 1-B and 2-C, a standing mode D, and a side mode F. The lean back mode is a compensation mode for compensating the view angle when a user watches a television while he/she lying down. In other words, the lean back mode is a selection item to compensate for the view angle when the view zone is lower than a front center of the display unit 30. The user's view angle may be varied, for example, by 10 degrees or 20 degrees in a downward direction from the front center of the display unit 30. If the quality of a recognized image is largely varied depending on the view angles, there is a need to compensate for the image while dividing the view angle into smaller angles. Therefore, the display apparatus provides a user with plural lean back modes to compensate for the view angle corresponding to various users' view angles.

The standing mode is a selection item to compensate for the view angle when a user's eyes are higher than the front center of the display unit 30, and the side mode is a selection item to compensate for the view angle when a user is positioned at a left or right side of the display unit 30.

The standing mode and the side mode are shown as one item D in FIG. 2, but shown as different items E and F, respectively, in FIG. 3. That is, the view zone items shown in the selection menu I and the selection menu II are not limited thereto. Alternatively, the standing mode or the side mode may also be divided into detailed modes depending on the view angles.

When one of the view zone items A to F is selected, the controller 60 controls the signal processor 20 to change at least one of an image quality adjusting value and a grayscale value of the video signal according to the selected item.

The signal processor 20 may use a lookup table with the image quality adjusting values corresponding to the view angle items in order to process a video signal. The image quality adjusting value may include at least one of definition, brightness, a contrast ratio, a tint, value, chroma, white balance, an offset and a gain value. The lookup table may include the image quality adjusting values individually set up with respect to the respective view zone items. Such a lookup table may be stored in a memory merged into the signal processor 20 or the controller 60, or in a memory provided as an independent hardware component.

Also, the signal processor 20 may process a video signal through the lookup table which includes changed grayscale values corresponding to the grayscale values of the received video signal. The signal processor 20 compares the grayscale values of the received video signal and those in the lookup table with respect to each pixel of the received video signal, and processes the received video signal to have a grayscale value corresponding to the selected view zone item. For example, if an input video signal has a grayscale value of 120 at a certain pixel, the grayscale value is changed to 100 corresponding to the lean back mode 1 A, or changed to 50 corresponding to the standing mode D. The lookup table may include the changed grayscale values corresponding to the grayscale value of the video signal with regard to each selection item.

The signal processor 20 may change only the image quality adjusting value or only the grayscale value of the video signal so as to compensate for the view angle. Further, the signal processor 20 may change both the image quality adjusting value and the grayscale value in accordance with a certain mode or a user's selection. Thus, an optimum displaying condition can be realized corresponding to a user's favorite view zone.

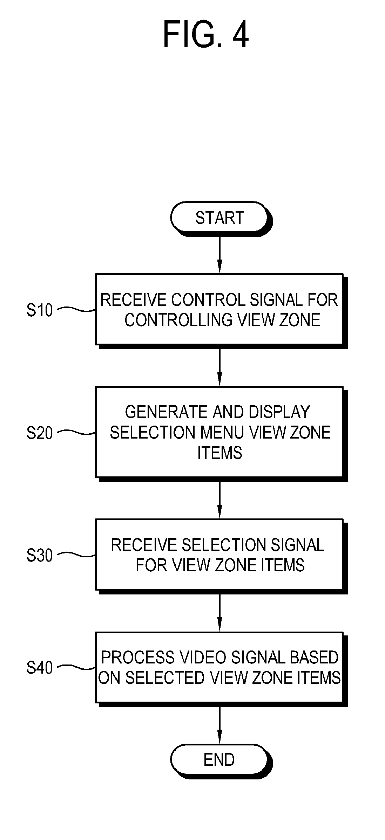

FIG. 4 is a control flowchart for explaining a video processing method in accordance with the display apparatus of FIG. 1. Referring to FIG. 4, the video processing method in this exemplary embodiment is as follows.

First, at operation S10, a control signal for controlling the view zone is received from the user selection unit 40.

At operation S20, the UI generator 50 generates the selection menu I or the selection menu II including, for example, the view zone items A to F in response to the control signal, and displays it on the display unit 30. Here, the number of view zone items and the kinds of modes included in the selection menu may be variously set up.

If a selection signal for selecting the view zone items A to F included in the selection menu I or the selection menu II is received through the user selection unit 40 at operation S30, the controller 60 controls the signal processor 20 to process a video signal according to the selected view zone item at operation S40. Here, the signal processor 20 processes the video signal so that at least one of the image quality adjusting value and the grayscale value of the video signal can be changed.

In this exemplary embodiment, the view zone item is selected after the selection menu I or the selection menu II is displayed through the UI generator 50, but is not limited thereto. Alternatively, the view zone item may be selected by a hot key or a function key for individually selecting the view zone item included in the selection menu I and the selection menu II. When the view zone item is selected by the hot key or the function key, information about the selected view zone item may be displayed on the display unit 30. Further, there may be provided a hot key or a function key for displaying the selection menu I or the selection menu II without requiring a plurality of selections by a user.

Also, hot keys may be provided for the displayed selection menus, respectively. At this time, the selection menu may be displayed corresponding to the hot key selected by a user.

According to an exemplary embodiment, the view angle is compensated by processing the video signal without changing a structure and a characteristic of a display panel, and there is provided a user interface allowing a user to select the view zone so that he/she can readily and conveniently view good image quality.

As described above, there is provided a display apparatus capable of adjusting quality of an image according to view zones, and a video processing method thereof.

Also, there is provided a display apparatus capable of displaying an image quality adjusting menu according to view zones, and a video processing method thereof.

Further, there is provided a display apparatus capable of effectively solving a problem with a view angle, and a video processing method thereof.

Although a few exemplary embodiments have been shown and described, it will be appreciated by those skilled in the art that changes may be made in these embodiments without departing from the principles and spirit of the invention, the scope of which is defined in the appended claims and their equivalents.

## Claims

1. A display apparatus comprising
a user interface (UI) generator which generates and outputs UI information to a display unit;
a user selection unit which allows a user to select a view zone;
a signal processor which processes a received video signal displayable through the display unit; and
a controller which controls the UI generator to display a selection menu comprising at least one view zone item on the display unit if a control signal for adjusting the view zone is selected from the user selection unit, and controls the signal processor to change at least one of an image quality adjusting value and a grayscale value of the received video signal if a view zone item is selected through the selection menu.

2. The display apparatus according to claim 1, further comprising a lookup table where at least one of the image quality adjusting value and the grayscale value is stored corresponding to the at least one view zone item.

3. The display apparatus according to claim 2, wherein the selection menu comprises a plurality of view zone items, and
wherein the lookup table stores at least one of the image quality adjusting value and the grayscale value for each of the plurality of view zone items.

4. The display apparatus according to claim 2, wherein the signal processor processes the received video signal based on the image quality adjusting value stored corresponding to a selected view zone item, or displays a video signal which is changed to have a stored grayscale value.

5. The display apparatus according to claim 2, wherein the signal processor compares each pixel of a grayscale value of the received video signal and a stored grayscale value of the received video signal and processes the received video signal to be displayed by a grayscale value corresponding to the selected view zone item.

6. The display apparatus according to claim 2, wherein the image quality adjusting value comprises at least one of definition, brightness, a contrast ratio, a tint, value, chroma, white balance, an offset and a gain value.

7. The display apparatus according to claim 1, wherein the view zone item comprises at least one of a lean back mode, a standing mode and a side mode.

8. A video processing method of a display apparatus, the method comprising:
receiving a video signal;
generating and displaying a selection menu comprising at least one view zone item; and
displaying the received video signal by changing at least one of an image quality adjusting value and a grayscale value of the received video signal in accordance with a view zone item selected through the selection menu.

9. The method according to claim 8, wherein the displaying the received video signal comprises at least one of processing the received video signal with a previously stored image quality adjusting value corresponding to the selected view zone item, and processing the received video signal with a previously stored grayscale value corresponding to the selected view zone item.

10. The method according to claim 9, wherein the processing the received video signal with the previously stored grayscale value corresponding to the selected view zone item comprises comparing a grayscale value of the received video signal and the previously stored grayscale value with respect to each pixel of the received video signal, and processing the received video signal to be displayed by a grayscale value corresponding to the selected view zone item.

11. The method according to claim 8, wherein the image quality adjusting value comprises at least one of definition, brightness, a contrast ratio, a tint, value, chroma, white balance, an offset and a gain value.

12. The method according to claim 9, wherein the view zone item comprises at least one of a lean back mode, a standing mode and a side mode.
